# EUROPEAN PATENT APPLICATION

(11) **EP 4 667 795 A1**
(43) Date of publication of application: **24.12.2025**
(21) Application number: 25184322.3
(22) Date of filing: 20.06.2025
(51) Int. Cl.: F16L 3/13, F16L 3/22, F24D 3/14, F16L 3/223, H02G 3/00

(54) **BRACKET SYSTEM FOR TUBE, PIPE OR CONDUIT**

(30) Priority: 21.06.2024 US 202463662854 P
(71) Applicant: MacDuffco Manufacturing Inc., Victoria, BC V8T 4S6 (CA)
(72) Inventor: MACDUFF, Matthew, VICTORIA, V8T 4S6 (CA)
(74) Representative: Gabriel, Franck

(57) **Abstract**

A bracket system comprising a pair of surface-mountable tube-supporting brackets mounted to a first joist (14) and a second joist (14) below a floor, or to a first stud (12) and a second stud (12) of a wall, wherein each of the pair of surface-mountable tube-supporting brackets has a body configured to receive a fastener to fasten the body to one of the first and second joists (14) or to one of the first and second studs (12), and wherein each of the pair of surface-mountable tube-supporting brackets has a tube-gripping portion and a tubular brace attached to the tube-gripping portion of each of the pair of surface-mountable tube-supporting brackets such that the tubular brace is secured between either the first joist (14) and the second joist (14) or between the first stud (12) and the second stud (12).

## Description

### TECHNICAL FIELD

The present disclosure relates to brackets for supporting tubes, pipes or conduits.

### BACKGROUND

Various types of tubes, pipes and conduits are commonly used in the construction of houses and buildings. These tubes, pipes and conduits may be used for plumbing, heating, cooling and ventilation (HVAC) and/or as electrical wire conduits. Often these tubes, pipes or conduits are located in a space under a floor between joists or in a wall space between studs. Installing these tubes, pipes and conduits in these spaces quickly and efficiently in the structure of the house or building can be a challenge.

It is therefore desirable to provide improved brackets and installation techniques to simplify the installation of tubes, pipes and conduits, particularly in the spaces between joists or studs.

### SUMMARY

In general, the specification discloses brackets, bracket systems and methods to install tubes, pipes or conduits.

One aspect of the disclosure is a bracket system comprising a pair of surface-mountable tube-supporting brackets mounted to a first joist and a second joist below a floor, or to a first stud and a second stud of a wall, wherein each of the pair of surface-mountable tube-supporting brackets has a body configured to receive a fastener to fasten the body to one of the first and second joists or to one of the first and second studs, and wherein each of the pair of surface-mountable tube-supporting brackets has a tube-gripping portion and a tubular brace attached to the tube-gripping portion of each of the pair of surface-mountable tube-supporting brackets such that the tubular brace is secured between either the first joist and the second joist or between the first stud and the second stud.

In some embodiments, the body is flat to abut a surface of one of the first and second studs or a surface of one of the first and second joists. The body may comprise a first hole in a first direction and a second hole in a second direction that is orthogonal to the first direction.

The tube-gripping portion may be C-shaped and may comprise a mouth region that flexes open to receive and grip the tubular brace.

The tube-gripping portion may comprise teeth, grooves or ridges to grip the tubular brace.

The tube-gripping portion of each of the surface-mountable tube-supporting brackets may define an average internal diameter D1 and an outer diameter D2 that ranges from 1.4 to 1.8 times D1 while being made of a material having a modulus of elasticity ranging from 600 to 1150 MPa.

The tube-gripping portion of each of the surface-mountable tube-supporting brackets may define an average internal diameter D1 and an outer diameter D2 that ranges from 1.5 to 1.7 times D1 while being made of a material having a modulus of elasticity ranging from 600 to 1150 MPa.

The surface-mountable tube-supporting brackets may be made of crosslinked polyethylene (PEX).

The tubular brace may be made of crosslinked polyethylene (PEX) tubing.

The bracket system may further comprise a tube-to-tube bracket comprising a first tube-gripping portion for attaching to the tubular brace and further comprising a second tube-gripping portion to receive and grip a tube, pipe or conduit.

The bracket system may further comprise a tube-to-tube bracket comprising a first tube-gripping portion for attaching to the tubular brace and further comprising a second tube-gripping portion oriented orthogonally to the first tube-gripping portion to receive and grip a tube, pipe or conduit.

The bracket system may further comprise an inverted J-shaped box-supporting bracket a tube-gripping portion to attach to the tubular brace and a straight portion having a hole for receiving a fastener to fasten a box to the box-supporting bracket.

The bracket system may further comprise a curved tube-supporting bracket having a first annular collar and a second annular collar aligned with and spaced apart from the first annular collar, thereby defining a gap between the first and second annular collars to receive a tube-to-tube bracket in the gap between the first and second annular collars, a curved guide portion for supporting an underside of the tube, while bending the tube over a predetermined angle, and a lower restraint to restrain the tube, wherein the tube-to-tube bracket has a tube-gripping portion to grip the tubular brace.

Another aspect of the disclosure is a method of installing a tube, pipe or conduit, the method comprising mounting a pair of surface-mountable tube-supporting brackets to surfaces of the first and second joists, or to surfaces of the first and second studs, wherein each of the pair of surface-mountable tube-supporting brackets each has a tube-gripping portion to receive and grip a tubular brace. The method may include attaching the tubular brace to the tube-gripping portion of each of the surface-mountable tube-supporting brackets such that the tubular brace extends between the first and second joists or between the first and second studs. The method entails attaching a first tube-gripping portion of a tube-to-tube bracket to the tubular brace. The method further entails attaching the tube, pipe or conduit to a second tube-gripping portion of the tube-to-tube bracket.

The method may comprise attaching a tube-gripping portion of an inverted J-shaped box-supporting bracket to the tubular brace and fastening a box to the box-supporting bracket through a hole in a straight portion extending from the tube-gripping portion, wherein the box is connected to the conduit.

The method may further comprise providing a curved tube-supporting bracket having a first annular collar and a second annular collar aligned with and spaced apart from the first annular collar, thereby defining a gap between the first and second annular collars, inserting a tube-to-tube bracket in the gap between the first and second annular collars, attaching a tube-gripping portion of the tube-to-tube bracket to the tubular brace, placing the tube over a curved guide portion for supporting an underside of the tube, while bending the tube over a predetermined angle.

Yet another aspect of the disclosure is a method of installing a tube, pipe or conduit, the method comprising fastening a surface-mountable tube-supporting bracket to a horizontal surface of a subfloor sheathing, the surface-mountable tube-supporting bracket having a body having a hole though which a fastener is inserted to fasten surface-mountable tube-supporting bracket. The surface-mountable tube-supporting bracket has a tube-gripping portion to receive and grip a tubular brace. The method may include attaching the tube, pipe or conduit to the tube-gripping portion of the surface-mountable tube-supporting bracket such.

This summary is not an extensive overview of all contemplated embodiments and is not intended to identify key or critical aspects or features of any embodiments or to delineate any embodiments. Other aspects and features will become apparent to those of ordinary skill in the art upon review of the following description in view of the accompanying figures.

### BRIEF DESCRIPTION OF THE DRAWINGS

Example embodiments will be described in more detail referring to the following figures, in which:
FIG. 1 is a perspective view of a hydronic heating system, specifically, a radiant floor heating system in which the bracket system may be used;
FIG. 2 is a top plan view showing two tubular braces of a portion of a hydronic system in which the tubular braces support a tube;
FIG. 3 is a perspective view of a radiant wall heating system as example of a hydronic system in which the bracket system may be used;
FIG. 4 are perspective and exploded views of a tubular brace and tube-supporting brackets of a bracket system for supporting tubes in a bent configuration;
FIG. 5 are perspective and exploded views of a tubular brace and two-part support brackets for connecting tubes in an orthogonal configuration; and
FIG. 6 are side views of a tube-supporting bracket and a conduit-supporting bracket.
FIG. 7 are perspective view of a bracket system having two types of tube-supporting brackets and a tubular brace in accordance with another embodiment of the present invention.
FIG. 8 is a perspective view a bracket system having surface-mountable tube-supporting brackets for securing a tubular brace and a tube-to-tube bracket for supporting a segment of tubing above the tubular brace.
FIG. 9 are perspective views of tube-supporting brackets, a box-supporting bracket and a tubular brace of a bracket system.
FIG. 10 is a perspective of the tube-supporting brackets supporting the tubular brace between adjoining studs or joists and further supporting a box.
FIG. 11 are perspective views of tube-supporting brackets and a tubular brace of a bracket system.
FIG. 12 is a perspective view of the tube-supporting brackets supporting the tubular brace between adjoining studs or joists and further supporting a curved or bent segment of tubing.
FIG. 13 is a perspective view of a bracket system used in a hydronic system.
FIG. 14 is a perspective view showing a first step of a method of installing a hydronic system using one embodiment of the bracket system.
FIG. 15 is a perspective view showing a second step of the method of installing the hydronic system using the bracket system.
FIG. 16 is a perspective view showing a third step of the method of installing the hydronic system using the bracket system.
FIG. 17 is a perspective view showing a fourth step of the method of installing the hydronic system using the bracket system.
FIG. 18 is a perspective view showing a fifth step of the method of installing the hydronic system using the bracket system.
FIG. 19 is a perspective view showing a first step of another method of installing a hydronic system by attaching the bracket system to a subfloor sheathing or other horizontal structure under a floor.
FIG. 20 is a perspective view showing a second step of the method of installing the hydronic system to a subfloor sheathing or other horizontal structure under a floor.
FIG. 21 is a perspective view showing a third step of the method of installing the hydronic system to a subfloor sheathing or other horizontal structure under a floor.
FIG. 22 is a perspective view showing a fourth of step the method of installing the hydronic system to a subfloor sheathing or other horizontal structure under a floor.
FIG. 23 is a schematic view of a hydronic system that uses the bracket system to secure the hydronic tubing.

It will be noted that throughout the appended figures, like features are identified by like reference numerals.

### DETAILED DESCRIPTION

Disclosed herein are embodiments relating to brackets, bracket systems and methods of installing the bracket system. The brackets may also be referred to as clips as they are design to clip onto tubes, pipes or conduits. The bracket system can be used to install tubes, pipes or conduits (e.g. tubing or piping for plumbing, electrical conduits, etc.). For example, and without limiting the applicability of the bracket system, the bracket system can be used to install a hydronic system, such as a radiant floor heating system or a radiant wall heating system. The bracket system has a tubular brace that extends between adjacent studs of a wall or adjacent joists of a floor. In various embodiments, a support bracket is mounted to the tubular brace. Different types of support brackets may be mounted to the tubular brace. For example, the support bracket may be a tube-supporting bracket for supporting a tube that carries water for heat transfer in the hydronic system. As another example, the support bracket may be a conduit-supporting bracket for supporting an electric wire conduit.

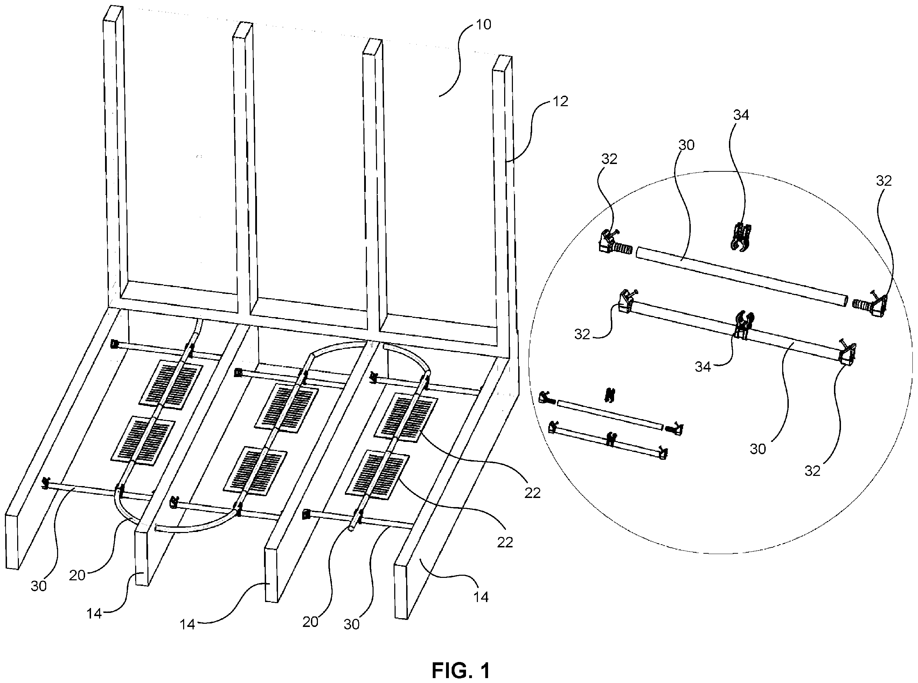

In the embodiment depicted by way of example in FIG. 1, a bracket system may be used to install a hydronic system. Not shown in the figures is a water heater (or boiler), heat exchanger and control system, which are components well known in the art for a hydronic heating system. In the example of FIG. 1, the hydronic system is shown installed in a dwelling, e.g. a house, building, office, etc., that has a wall 10, studs 12, a floor (not shown) and joists 14. As shown in FIG. 1, the hydronic system includes a tube 20 to carry water for heat transfer. In one specific implementation, the tube is crosslinked polyethylene (PEX) tubing. It will be appreciated that any other functionally equivalent material may be used for the tube. As shown in FIG. 1, the tube 20 extends in an inter-joist space beneath a floor between a first joist and a second joist. Alternatively, if used in a radiant wall heating system, the tube extends in a wall space between a first stud and a second stud. The hydronic system includes a tubular brace 30 extending from the first joist to the second joist as shown in FIG. 1. In the alternative implementation of a radiant wall heating system, the tubular brace 30 extends between the first stud and the second stud. In one embodiment, the tubular brace 30 is a segment of tubing identical to the tube used to carry the water, e.g. the tube and tubular brace may both be made of crosslinked polyethylene (PEX) tubing. The tubular brace 30 includes anchors 32 for mounting the tubular brace to the joists 14. As shown in FIG. 1, heat-radiating fins 22 may be affixed to the tube 20 to promote heat transfer. The hydronic system includes, as shown in FIG. 1, a tube-supporting bracket 34 mounted to the tubular brace 30 for supporting the tube 20.

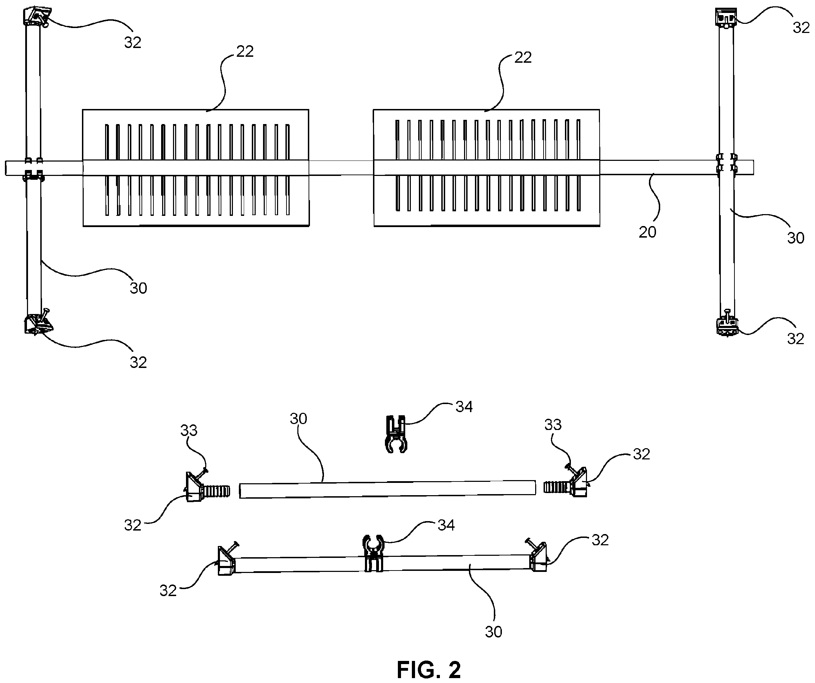

As depicted by way of example in FIG. 2, the tubular brace 30 comprises anchors 32 for anchoring the tubular brace to the joists or studs. Each of the anchors 32 comprises a cylindrical element 31 to mate with an end of the tube 30 and a body portion having a bore through which a fastener 33 is inserted to fasten the anchor to a respective joist or stud.

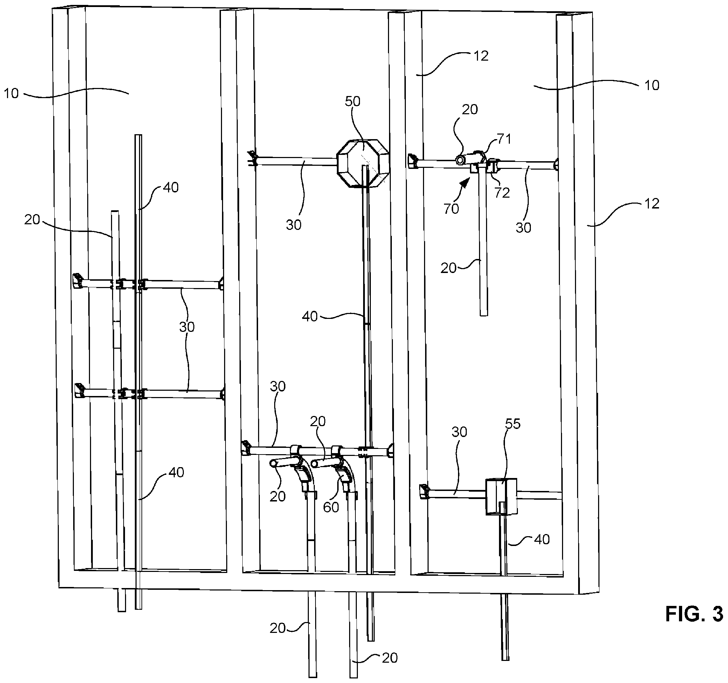

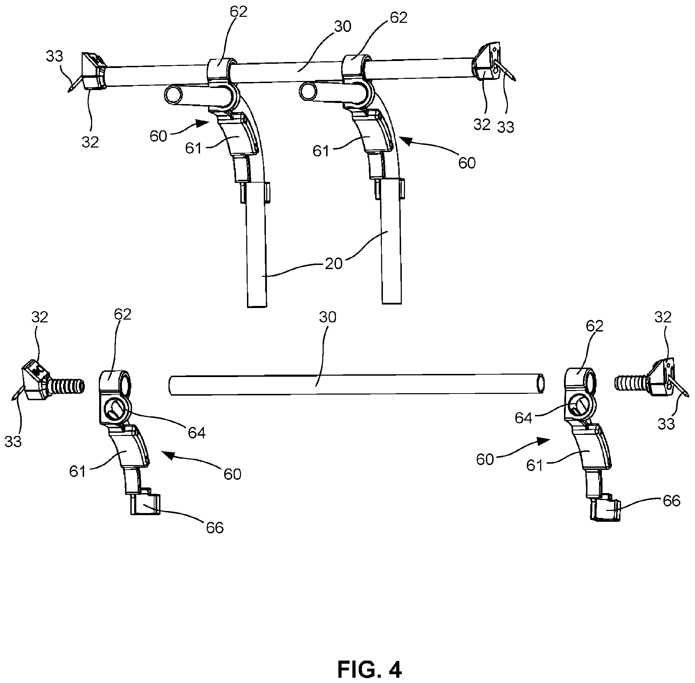

As depicted by way of example in FIG. 3, the hydronic system (in this instance, a radiant wall heating system) includes multiple tubular braces 30 between adjacent pairs of studs. FIG. 3 shows tubes 20 for carrying water as well as electric wire conduits 40 housing electric wires for electrically connecting to one or more electrical boxes, e.g. octagonal box 50 and rectangular box 55. As shown in FIG. 3 and in more detail in FIG. 4, a first type of tube-supporting bracket 60 has a curved body 61, a collar 62 at a first end of the body that slides over the tubular brace, a concave clip-like portion 66 at a second end of the body to grasp the tube and an annular guide 64 through which the tube 20 extends to thereby bend the tube from a first orientation to a second orientation. For example, as shown, the first orientation may be orthogonal to the second orientation. It will be appreciated that the first and second orientations may be different from what is shown.

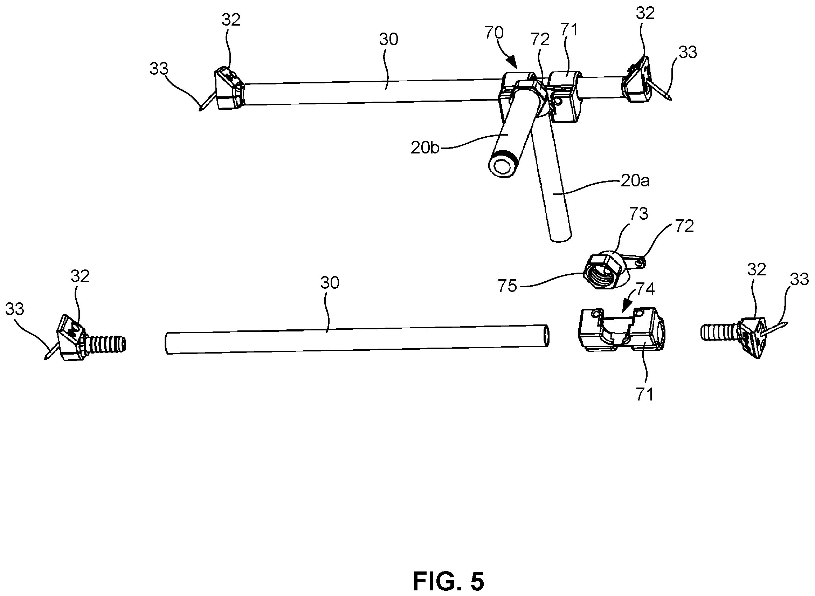

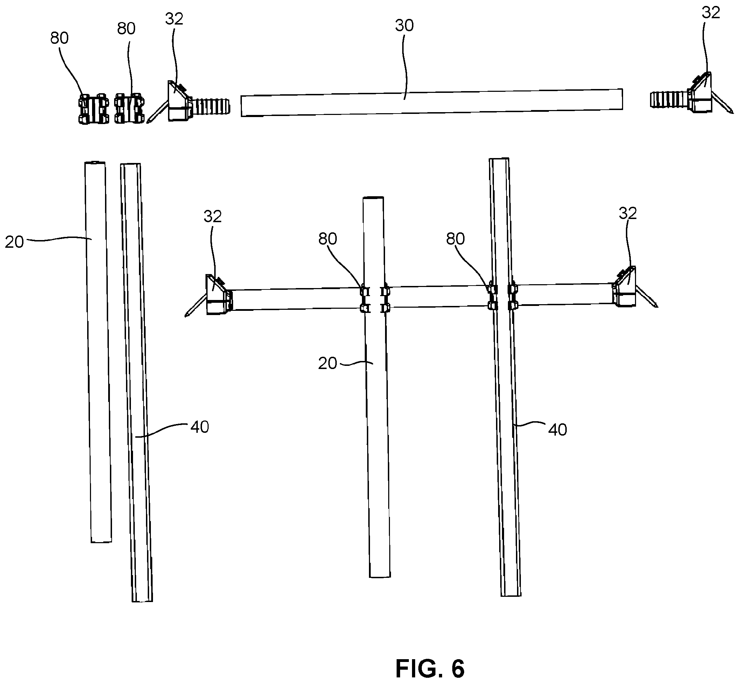

As shown in FIG. 3 and in greater detail in FIG. 5, a second type of tube-supporting bracket 70 includes a first component 71 and a second component 72. The first component has a collar that slides over the tubular brace. The first component 71 also has a tube-receiving aperture to receive a first tube segment 20a, e.g. a vertical segment of tube. The second component has an elbow 73 configured to fit into a receptable 74 of the first component. The elbow 72 has a tube-receiving bore 75 to receive a second tube segment 20b, e.g. a horizontal segment of tube. As depicted in FIG. 3 and in greater detail in FIG. 6, another type of tube-supporting bracket 80 has a concave clip-like element having gripping fingers to grip the tube. For example, there may be four gripping fingers, prongs, tines or the like. Instead of a clip-type connector, the bracket 80 can have another form of connection, e.g. a hose clamp, or any other type of fastening or connecting means. The hydronic system may also comprise a conduit-supporting bracket (also denoted by reference 80) mounted to the tubular brace. The conduit-supporting bracket has a concave clip-like element having gripping fingers to grip a conduit 40 for supporting an electric wire conduit. The electric wire conduit may lead wires to an electrical box as shown by way of example in FIG. 3. The system may thus also include a box-supporting bracket mounted to the tubular brace for supporting an electrical box in the wall space between the first and second studs. In one example, the electrical box is an octagonal box 50. In another example, the electrical box is a rectangular box 55.

Another aspect of the invention is a method of installing a hydronic system. The method comprises steps, acts or operations of: attaching a tubular brace between either a first joist and a second joist in a inter-joist space beneath or attaching the tubular brace between a first stud and a second stud in a wall space; connecting a tube-supporting bracket to the tubular brace; and mounting a tube for carrying water for heat transfer to the tube-supporting bracket. In one embodiment, the method is performed using a tubular brace that is a segment of tubing identical to the tube used to carry the water. In one embodiment of the method, the tube is crosslinked polyethylene (PEX) tubing.

In one embodiment, the entails anchoring the tubular brace to the joists or studs using anchors. The anchoring comprises mating a cylindrical element of each anchor with an end of the tube and inserting a fastener through a bore in a body portion of the anchor to fasten the anchor to a respective joist or stud.

In one embodiment of the method, the tube-supporting bracket has a curved body, a collar at a first end of the body that slides over the tubular brace, a concave clip-like portion at a second end of the body to grasp the tube and an annular guide. The method comprises extending the tube through the annular guide to thereby bend the tube from a first orientation to a second orientation and clipping the tube to the clip-like portion.

In one embodiment of the method, the tube-supporting bracket includes a first component and a second component. The first component has a collar that slides over the tubular brace and has a tube-receiving aperture to receive a first tube segment. The second component has an elbow configured to fit into a receptable of the first component. The elbow has a tube-receiving bore to receive a second tube segment. The method comprises affixing the first tube segment to the tube-receiving aperture and affixing the second tube segment to the tube-receiving bore.

In one embodiment of the method, the tube-supporting bracket has a concave clip-like element having gripping fingers. The method comprises clipping the tube to the tube-supporting bracket.

In one embodiment of the method, a conduit-supporting bracket is mounted to the tubular brace, the conduit-supporting bracket having a concave clip-like element having gripping fingers to grip a conduit support. The method comprises clipping an electric wire conduit to the concave clip-like element.

In one embodiment, the method further comprises mounting a box-supporting bracket to the tubular brace and connecting an electrical box to the box-supporting bracket in the wall space between the first and second studs.

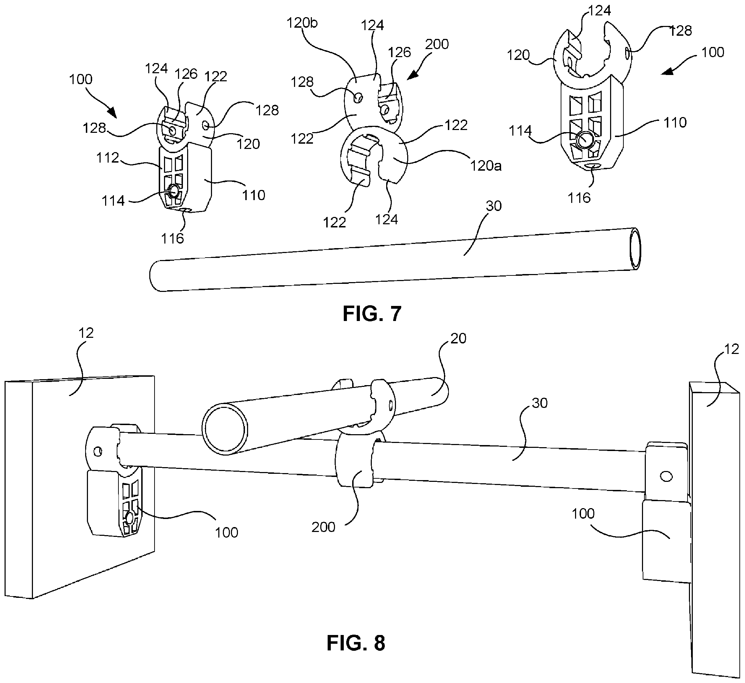

FIGS. 7 to 22 depict other bracket systems in accordance with other embodiments of the present invention. Various types of tube-supporting brackets, also referred to as tube clips, facilitate installation of tubing, piping or conduits. This is particularly useful for installing hydronic systems such as radiant floor heating but may be used for other applications to install other types of pipes, tubes or conduits.

FIG. 7 depicts perspective views of two types of tube-supporting brackets 100, 200 in accordance with other embodiments of the invention. For simplicity, the specification may use the expression "tube" to mean a tube (or tubing), a pipe (or piping) or a conduit (or any other cable, line or similar, generally elongated or cylindrical object that is to be installed or mounted such as a fiber-optic cable or bundle, ethernet cable or bundle, pneumatic hose, hydraulic hose, etc). Accordingly, the expression "tube-supporting bracket" includes a pipe-supporting bracket or a conduit-supporting bracket. Likewise, a tube-to-tube bracket includes a pipe-to-pipe bracket or a conduit-to-conduit bracket. The brackets can also be used to attach a tube to a pipe, a tube to a conduit, a pipe to a tube, a pipe to a conduit, a conduit to a tube, or a conduit to a pipe. The bracket systems are primarily designed for use in houses, dwellings or buildings but could also be used in other contexts or applications including, for example, inside factories, power plants, industrial manufacturing sites, oil or gas extraction or processing facilities, or even inside vehicles such as ships, trains, planes or automobiles. The tube-supporting brackets 100, 200 of FIG. 7 are meant to receive and secure a tubular brace 30 and to support a tube, pipe or conduit, e.g. supporting a tube in a hydronic system. The tubular brace 30 may have a length equal to, or substantially equal to, a gap between studs or joists. As depicted by way of example in FIG. 7, a surface-mountable tube-supporting bracket 100 is configured to attach, secure or mount the tubular brace 30 to a flat and rigid surface of a dwelling or building such as a surface of a stud or joist. As further depicted by way of example in FIG. 7, the surface-mountable tube-supporting bracket 100 includes a body portion (or body) 110 and a tube-gripping portion 120 that grips the tubular brace 30. The body 110 may have a flat surface or open-mesh structure 112 defining a plane to abut the stud or joist. The body 110 may have two parallel flat surfaces (two planar surfaces) as shown. In other words, the body has a flat or planar front face and a flat or planar rear face. The bottom of the body is also flat or planar in this embodiment. The body may also have sides that are entirely or partially flat too. Optionally, the body has beveled or chamfered corners that extend from the flat bottom to the flat sides of the body as illustrated in FIG. 7. The top of the body 110 may be curved or concave to mate with the correspondingly curved or convex base portion of the tube-gripping portion 120. The body 110 includes a first hole 114 in a first direction. The body 110 may optionally also have a second hole 116 in a second direction that is orthogonal to the first direction. The first hole 114 may be normal to the flat (planar) surface, e.g. the first hole may extend from the first face to the second face. The first hole 114 may be a round bore to receive a fastener, e.g. screw, that may be inserted though the first hole to fasten the body to the stud or joist. The second hole 116 may be a round bore to receive a fastener, e.g. screw, that may be inserted though the second hole to fasten the body to a subfloor sheathing or other horizontal structure. The second hole 116 extends centrally from the flat bottom to a base portion of the tube-gripping portion. A countersunk or counterbored hole at the entry of the second hole 116 from the tube-gripping portion can be cut or formed to provide clearance for the head of the fastener so it does not interfere with or otherwise block the tubular brace when clipped onto the tube-gripping portion. Since the first and second holes are on intersecting axes, only one of the two holes is used depending on the desired orientation of the bracket 100. The bracket can thus be used in one of two orientations to secure a tube, pipe or conduit. The tube-gripping portion 120 may be curved, concave, C-shaped or U-shaped as illustrated by way of example. As shown by way of example in FIG. 7, the tube-gripping portion 120 has a generally semicircular or C-shaped portion 122 that has a base or base portion (the part of the C-shaped portion that is connected to the body) and a mouth portion 124 having two curved fingers (or curved arms) or curved finger-like (or curved arm-like) extensions. Optionally, these arms (or fingers) defining the mouth may be flared outwardly in a natural resting (undeformed) state to facilitate spreading of the arms (or fingers) when the tubular brace is pressed against the mouth. The C-shaped portion 122 may have teeth, grooves or ridges 126. The tube-gripping portion 120 in one embodiment is made of an elastic material, e.g. crosslinked polyethylene (PEX) which deforms (i.e. flexes open) to forcibly receive the tubular brace and then grasps the tubular brace in the tube-gripping portion as the elastic material seeks to return to its original undeformed position. The depth (thickness) of the tube-gripping portion is the same as the body in the illustrated embodiment so that the entire surface-mountable tube-supporting bracket 100 fits flush against the surface of the stud or joist. In the illustrated embodiment, the front and rear faces of the tube-gripping portion are flat and planar with the front and rear faces of the body so that the entire surface-mountable tube-supporting bracket 100 fits flush against the surface of the stud or joist. Optionally, the tube-gripping portion includes apertures 128 in the C-shaped or semicircular portion 122 to receive optional fasteners, e.g. set screws, to secure the tubular brace 30 to the surface-mountable tube-supporting bracket 100. In the illustrated embodiment, the width of the tube-gripping portion is greater than the width of the body. The overall height of the tube-gripping portion and the body (i.e. overall height of the bracket 100) is greater than the width of the tube-gripping portion in the illustrated embodiment. Also, in the embodiment of FIG. 7, the height of the body 110 is greater than the height of the tube-gripping portion 120 (and also greater than the outer diameter of the tube-gripping portion). Furthermore, in the embodiment of FIG. 7, the first hole 114 is disposed in the lower half portion of the body. As shown by way of example in FIG. 7, the first hole 114 is closer to the flat bottom of the body than to the top of the body. In one embodiment, the tube-gripping portion 120 is fabricated by cutting a segment of PEX tubing from a length of unused or discarded PEX tubing that would otherwise be waste or scrap. The PEX tubing is further cut to create the mouth. The holes 128 can be drilled into the PEX tubing. The body can be formed of PEX or another suitable polymer material, e.g. molded or 3D printed with the holes already in place. The base portion of the tube-gripping portion 120 may be fused, bonded or otherwise permanently affixed to the body. Holes 114 and 116 could also be drilled. FIG. 7 also depicts a tube-to-tube bracket 200 that clips onto the tubular brace 30 and then supports a hydronic (fluid-carrying) tube, pipe or conduit. The tube-to-tube bracket 200, as shown in FIG. 7, has a first tube-gripping portion 120a (first tube-clipping portion) and a second tube-gripping portion 120b (second tube-clipping portion) that is oriented orthogonally to the first tube-gripping portion 120a. The first and second tube-gripping portions 120a, 120b are similar to the tube-gripping portion 120 described above. The first and second tube-gripping portions 120a, 120b each have a semicircular or C-shaped portion 122, a mouth portion 124, teeth, grooves or ridges 126, and apertures 128. The first and second tube-gripping portions 120a, 120b (in one embodiment) are each made of an elastic material, e.g. crosslinked polyethylene (PEX). The first tube-gripping portion 120a deforms (i.e. flexes open) to forcibly receive the tubular brace in the first tube-gripping portion 120a and then grasps the tubular brace in the first tube-gripping portion 120a as the elastic material seeks to return to its original undeformed position. Similarly, the second tube-gripping portion 120b deforms (i.e. flexes open) to forcibly receive the hydronic tubing in the second tube-gripping portion 120b and then grasps the hydronic tubing in the second tube-gripping portion 120b as the elastic material seeks to return to its original undeformed position. The tube-to-tube bracket 200 thus orients the hydronic tubing at ninety degrees to the tubular brace. In a variant, for another application, the first and second tube-gripping portions may be mounted to each other at a different angle than ninety degrees. In this embodiment, the tubular brace and hydronic tubing have the same outer diameter. In a variant, the tube-to-tube bracket 200 may be provided with differently sized tube-gripping portions to clip onto tubes having two different outer diameters. In one embodiment, the first and second tube-gripping portions 120a, 120b are fabricated by cutting segments of PEX tubing from a length of unused or discarded PEX tubing that would otherwise be waste or scrap. The PEX tubing is further cut to create the mouth. The holes 128 can be drilled into the PEX tubing. The base portions of the first and second tube-gripping portions 120a, 120b may be fused, bonded or otherwise permanently affixed to each other to form the tube-to-tube bracket.

FIG. 8 is a perspective view of the tube-supporting brackets 100, 200 supporting the tubular brace 30 between adjoining studs 12 (or between adjoining joists) and further supporting a segment of tubing 20 above the tubular brace 30. More specifically, as shown in FIG. 8, a pair of surface-mountable tube-supporting brackets 100 are fastened to the studs 12 (or joists), e.g. by threaded fasteners inserted through each hole 116, to support the tubular brace 30 between the studs 12 (or joists). A tube-to-tube bracket 200 clips onto the tubular brace 30, i.e. attaches to the tubular brace 30. The tube-to-tube bracket 200 supports the hydronic tubing 20 above the tubular brace 30 as shown in FIG. 8. The tube-to-tube bracket 200 thus orients the hydronic tubing 20 at ninety degrees to the tubular brace 30 as illustrated in FIG. 8. The hydronic tubing 20 is thus oriented to be parallel to the studs 12 (or joists). As depicted by way of example in FIG. 8, when the tubing is gripped by the tube-to-tube bracket 200, the mouth is flared open relative to its undeformed position. In other words, the opening of the mouth when gripping the tubing is wider than the opening of the mouth without the tubing.

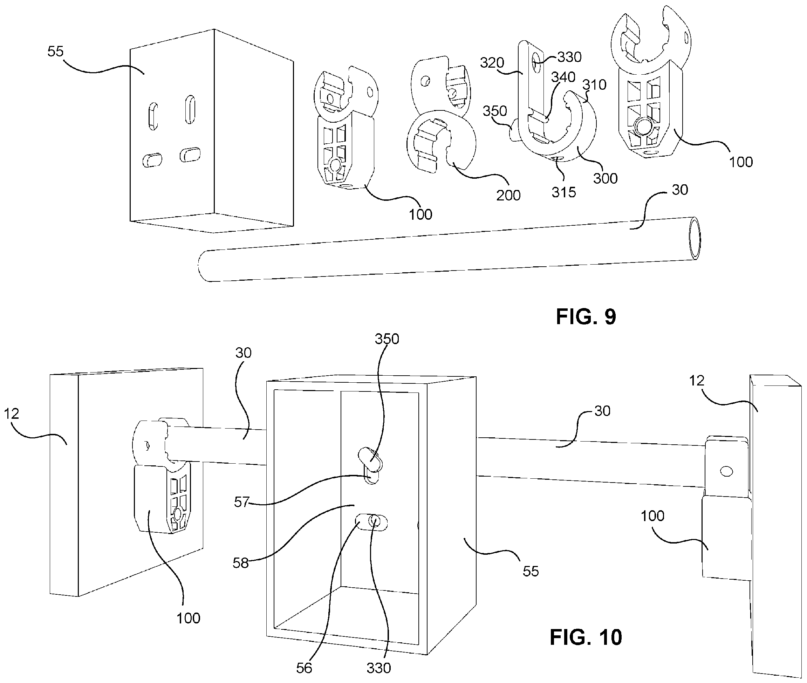

FIG. 9 depicts perspective views of two surface-mountable tube-supporting brackets 100, a tubular brace 30, a tube-to-tube bracket 200 and a box-supporting bracket 300. The box-supporting bracket 300 may be used to support a box 55, such as for example, an electrical junction box. The box may be a rectangular box or a box of another shape. As depicted by way of example in FIG. 9, the box-supporting bracket 300 may have an inverted J-shaped body. The box-supporting bracket 300 may have a tube-gripping portion 310 that has a curved or semicircular head that is configured to fit over the tubular brace 30 to attach to the tubular brace. The box-supporting bracket 300 may also have a straight hanger portion 320 or tail that extends from the tube-gripping portion 310. The tube-gripping portion 310 may have a hole 315 for a fastener, e.g. a set screw, to secure the tube-gripping portion 310 to the tubular brace. The straight hanger portion 320 may also have a hole through which a fastener may be inserted to fasten the box-supporting bracket 300 to the box 55. The tube-gripping portion 310 may include teeth, grooves or ridges to better grip the tubular brace. The straight hanger portion 320 may also have a protrusion 350 or hook spaced above the hole 330. The protrusion or hook 350 is configured to fit through a hole in the box to secure the box from unwanted rotation.

FIG. 10 is a perspective of two surface-mountable tube-supporting brackets 100 supporting the tubular brace 30 between adjoining studs 12 or joists. As shown in FIG. 10 is a box 55 supported by the box-supporting bracket. As shown by way of example in FIG. 10, the box 55 has a lower hole 56 and an upper hole 57 in the back wall 58 of the box 55. The protrusion 350 or hook fits through the upper hole 57 while the hole 330 aligns with the lower hole 56 to receive a fastener to secure the box-supporting bracket to the box. As shown by way of example in FIG. 10, the protrusion 350 or hook may have an oblong cross-sectional profile that slides through a correspondingly shaped oblong upper hole 57. As shown by way of example in FIG. 10, the protrusion 350 may be inserted at an oblique angle and then rotated, turned or twisted to lock the protrusion 350 relative to the upper hole 57. When the fastener is then inserted into the lower hole 56 and the hole 330, the box is then fully secured to the box-supporting bracket. Once fastened in this manner with the protrusion rotated inside the upper hole, the box can neither slide nor rotate relative to the box-supporting bracket.

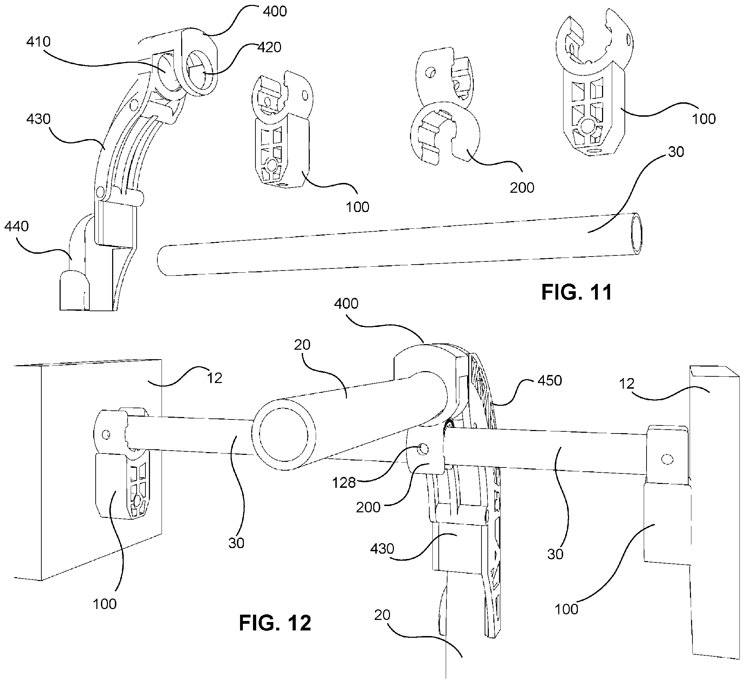

FIG. 11 depicts perspective views of two surface-mountable tube-supporting brackets 100, a tubular brace 30, a tube-to-tube bracket 200 and a curved tube-supporting bracket 400. The curved tube-supporting bracket 400 as shown by way of example in FIG. 11 includes a first annular collar 410 and a second annular collar 420 aligned with and spaced apart from the first annular collar 410, thereby defining a gap between the first and second annular collars. The tube-to-tube bracket 200 fits in this gap between the first and second annular collars. In other words, the upper tube-gripping portion of the tube-to-tube bracket is fitted into the gap between the first and second annular collars while the lower tube-gripping portion of the tube-to-tube bracket clips onto the tubular brace. The curved tube-supporting bracket 400 further includes, as depicted in the embodiment of FIG. 11, a curved guide portion 430, e.g. for supporting an underside of the hydronic tubing, while bending the hydronic tubing over a predetermined angle, e.g. 90 degrees. The curved tube-supporting bracket 400 further includes, as depicted in the embodiment of FIG. 11, a lower collar or restraint 440, e.g. for holding the hydronic tubing in a first orientation before it bends over the predetermined angle over the curved guide portion into a second orientation. The curved guide portion may have a constant radius, i.e. a defines a 90-degree arc. In a variant, the curved guide portion may have a non-constant radius.

FIG. 12 is a perspective view of two surface-mountable tube-supporting brackets 100 supporting the tubular brace 30 between adjoining studs 12 or joists and further supporting a curved or bent segment of tubing using the curved tube-supporting bracket 400. In this example, the lower part of the hydronic tubing 20 is vertical whereas the upper part of the hydronic tubing 20 is horizontal. The curved tube-supporting bracket 400 thus bends the tubing 90 degrees. The tube-to-tube bracket 200 may be secured to the tubular brace by inserting a fastener, e.g. set screw, through hole 128. Optionally, as depicted by way of example in FIG. 12, the curved tube-supporting bracket 400 may have tube-restraining side walls or side covers 450 to restrain the tubing. Optionally, the curved tube-supporting bracket 400 may have side and rear cover structure to enclose the tubing and/or to assist in the bending of the tubing.

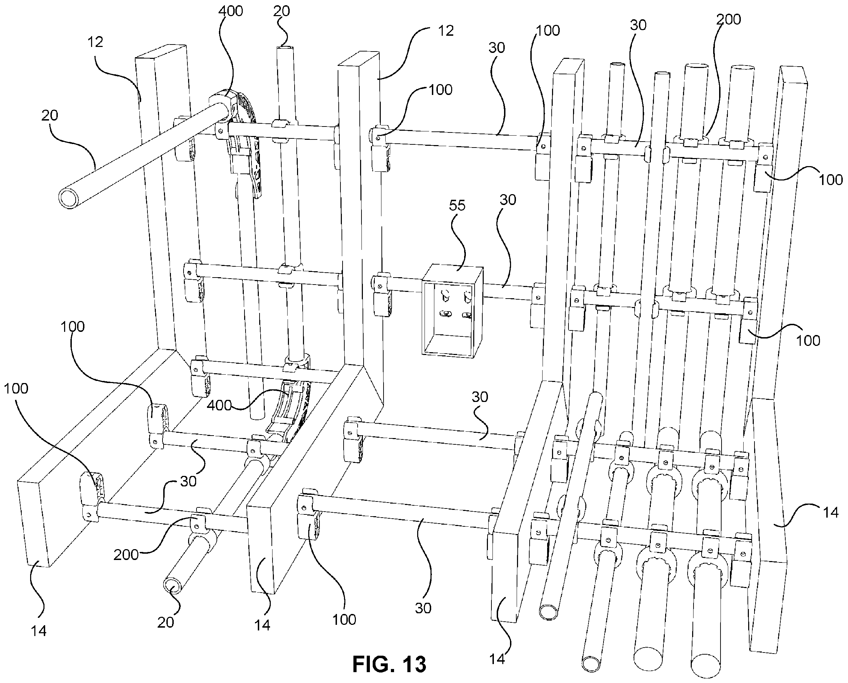

FIG. 13 is a perspective view of a hydronic system having various tube-supporting brackets as well as a box-supporting bracket in accordance with an embodiment of the invention. The hydronic system, in this example, has a plurality of tubular braces 30 (cross braces) extending between adjacent studs 12 and between adjacent joists 14. A plurality of surface-mountable tube-supporting brackets 100 support the tubular braces 30. Various tube-to-tube brackets 200 support the various respective segments of hydronic tubing 20. Two curved tube-supporting brackets 400 cause respective segments of the hydronic tubing 20 to bend over 90 degrees as shown in FIG. 13. An electrical junction box 55 is supported between two adjacent studs 12 by a box-supporting bracket attached to one of the tubular braces 30. Note that the box-supporting bracket is not visible in FIG. 13 as it is behind the box 55. The tube-to-tube brackets 200 may be made with different dimensions to grip tubes, pipes or conduits of different diameters. The tube-to-tube brackets 200 may therefore also be dimensioned to grip electrical conduits. For example, the hydronic tubing may be PEX tubing or pipe having metric (SI) diameters ranging from 10 to 30 mm, e.g. 10mm, 15mm, 22mm or 28mm. Alternatively, the PEX tubing commonly used in the US may be ½ inch, ⅝ inch, ¾ inch or 1 inch in diameter with respective wall thicknesses of 0.070 inch, 0.083 inch, 0.097 inch or 0.125 inch. Any other suitable diameter of tubing may be used. The modulus of elasticity of the PEX tubing may range from 600 to 1150 MPa. Another material may be substituted if it has functionally equivalent properties. For example, a functionally equivalent material in pipe form could have similar dimensions as described above and have a modulus of elasticity ranging from 600 to 1150 MPa. For example, the surface-mountable tube-supporting bracket 100 has a gripping portion defining an average internal diameter (accounting for the teeth, grooves and/or ridges) D1 and an outer diameter D2 that ranges from 1.4 to 1.8 times D1, preferably 1.5 to 1.7 times D1, and more preferably 1.6 times D1 while being made of a material having a modulus of elasticity ranging from 600 to 1150 MPa. This provides a suitable flexure to flex open (flare open) the mouth of the gripping portion to receive the tubing. In another implementation, the radial girth of each semicircular arm of the gripping portion may be 16%-20% of D1, preferably 17-19% of D1, and more preferably 18% of D1 while being made of a material having a modulus of elasticity ranging from 600 to 1150 MPa. Again, this provides a suitable flexure to flare open the mouth of the gripping portion to receive the tubing. In the illustrated embodiments, the mouth defines an opening or gap that is smaller than the average inner diameter D1. In the illustrated embodiments, the diameter of the tubing or tubular brace is equal, or substantially equal, to D1. Substantially equal, in this context, means +/- 10% or preferably +/- 5%. In another embodiment, the diameter of the tubing or tubular brace is equal to, or sightly less than, D1 provided the diameter of the tubing or tubular brace is smaller than the gap or opening between the arms or fingers of the mouth. In other words, the bracket can still secure a tubular brace even if it is slightly smaller in diameter, especially if set screws are used to hold it in place. Slightly less, in this context, means 1-10% less than D1, or preferably 1-5% less than D1.

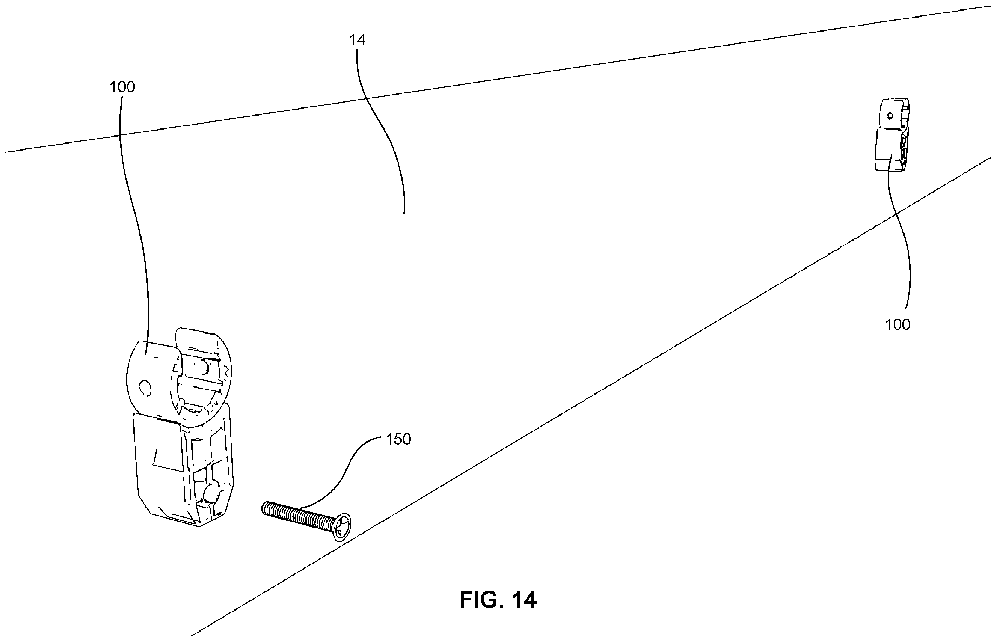

FIG. 14 is a perspective view showing a first step of a method of installing a hydronic system between joists 14 in accordance with one embodiment of the invention. In the example of FIG. 14, the first step of the method entails attaching the surface-mountable tube-supporting brackets 100 to the opposite sides of the joists 14. This may be accomplished by fastening a threaded fastener 150, e.g. a screw. The surface-mountable tube-supporting brackets 100 should be fastened so that each pair of brackets 100 align with each other to enable the brace to be installed orthogonal to the joists.

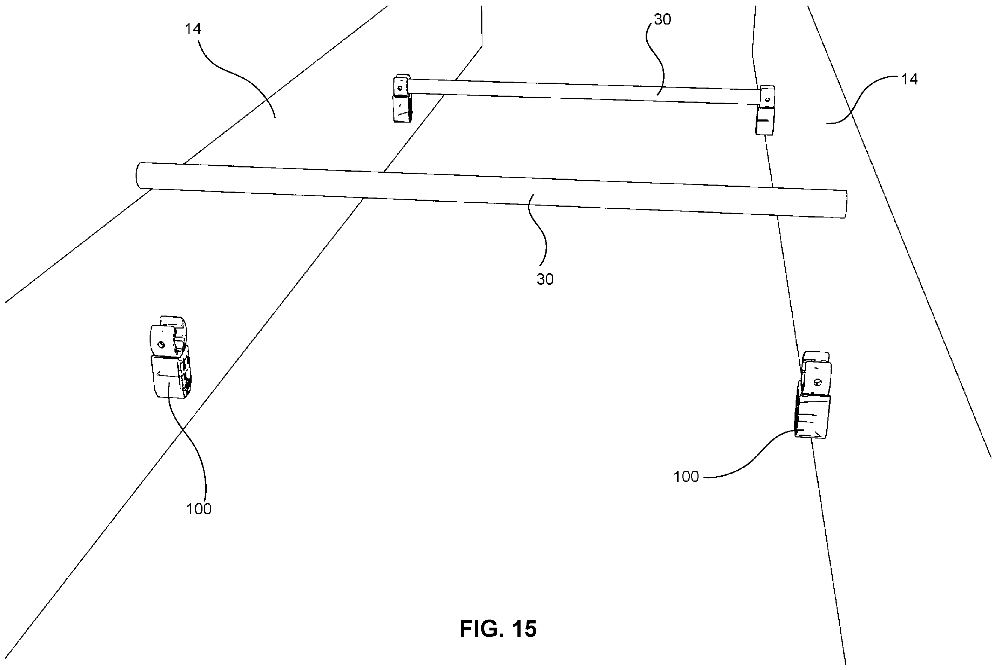

FIG. 15 is a perspective view showing a second step of the method of installing the hydronic system between the joists 14. In the second step, the tubular braces 30 are secured to each pair of surface-mountable tube-supporting brackets 100.

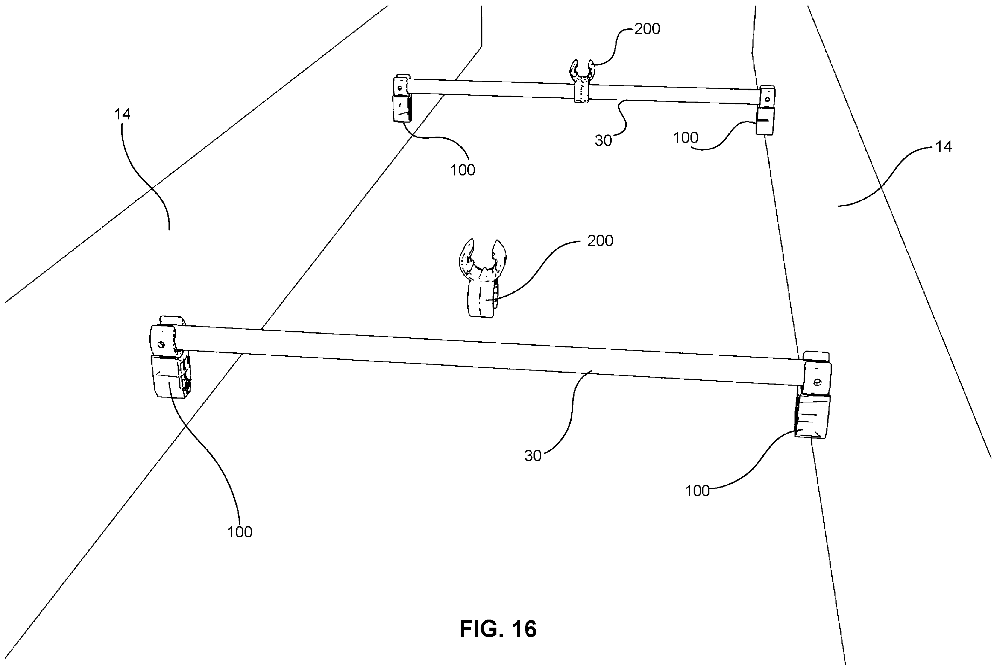

FIG. 16 is a perspective view showing a third step of the method of installing the hydronic system between the joists 14. In this third step, the tube-to-tube brackets 200 are clipped onto the tubular braces 30. The tube-to-tube brackets 200 may be clipped onto the tubular braces 30 at a midway point along each of the tubular braces.

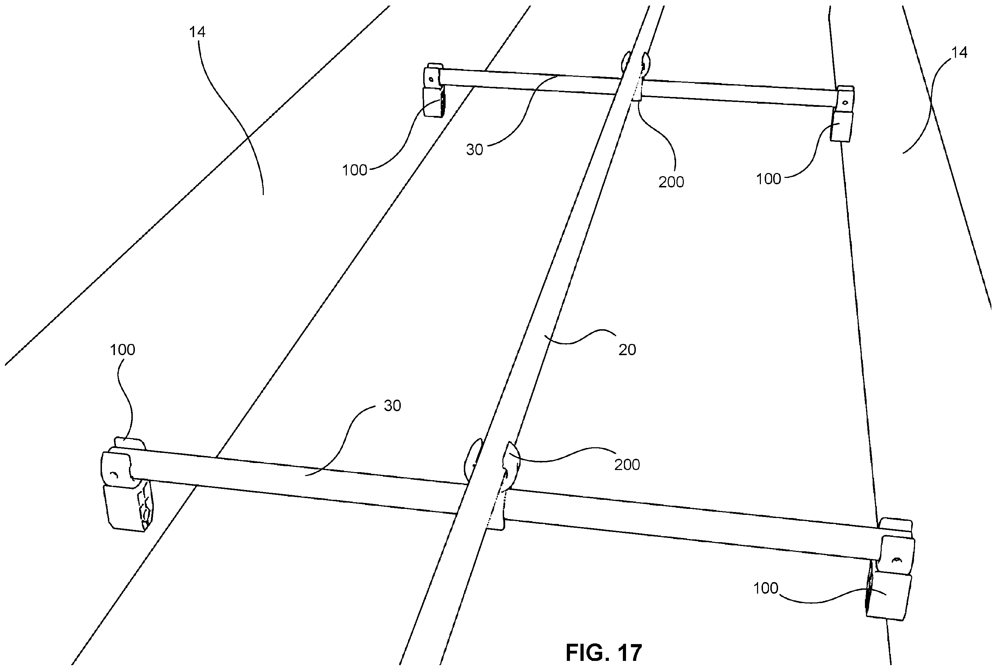

FIG. 17 is a perspective view showing a fourth step of the method of installing the hydronic system between the joists 14. The hydronic tubing 20 can then be clipped onto (i.e. attached to) the tube-to-tube brackets 200. As shown in this example, the hydronic tubing is orthogonal to the tubular braces 30 and parallel to the joists 14. In this example, the hydronic tubing 20 runs along the middle of the gap between the joists.

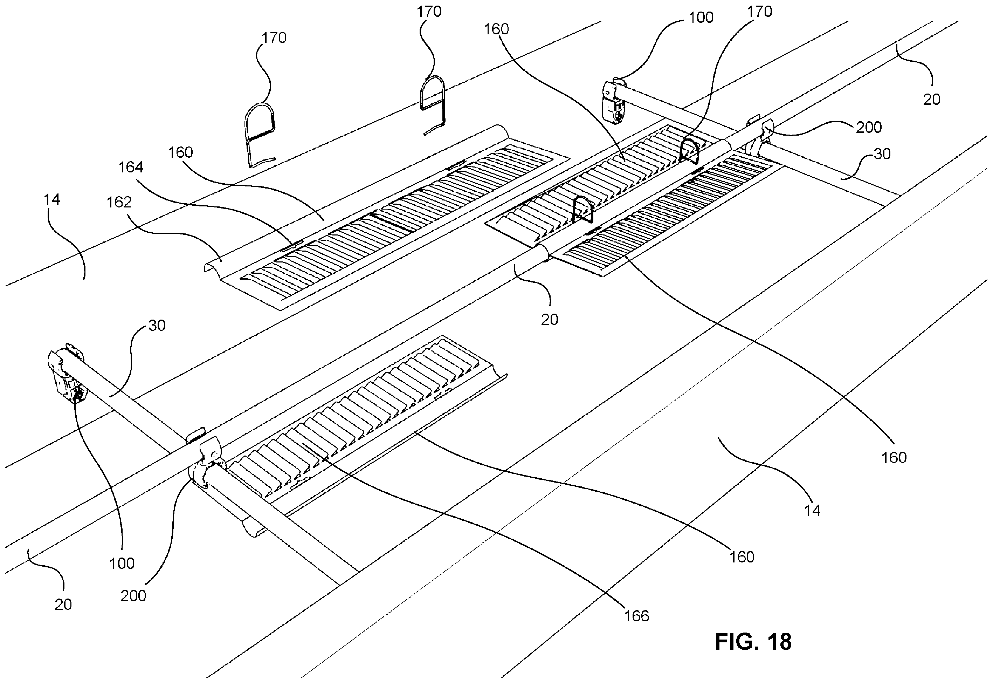

FIG. 18 is a perspective view showing a fifth step of the method of installing the hydronic system between the joists 14. In this fifth step, heat-exchanging fins 160 are attached to the hydronic tubing 20 to enhance heat transfer. The fins 160 may be attached to the hydronic tubing 20 by e-shaped wire clip or twist clips 170. The fins have a semicircular trough 162 having a diameter substantially equal to (or slightly larger than) the diameter of the tubing 20 so that the trough fits either on top of the tubing 20 or fits on the bottom of the tubing. The twist clips 170 are inserted through a horizontal slot 164 in the fin 160 and then rotated (twisted) to affix the fin 160 to the tubing 20. The fin 160 may be a louvered fin as shown. That is, the fin 160 may have a plurality of louvers 166.

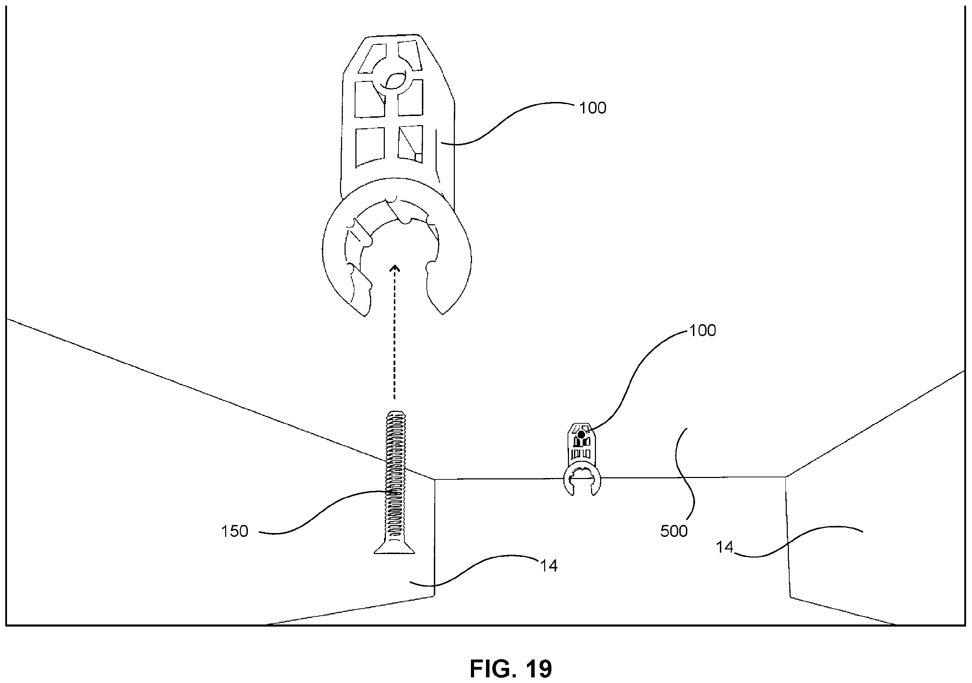

FIG. 19 is a perspective view showing a first step of another method of installing the hydronic system to a subfloor sheathing 500 or other horizontal structure under a floor. The subfloor sheathing 500 is supported by joists 14. The fastener 500 is inserted vertically (i.e. upwardly) through the surface-mountable tube-supporting bracket 100 to secure the surface-mountable tube-supporting bracket 100 to the underside of the subfloor sheathing. The brackets 100 should be aligned and spaced equally apart from the joists.

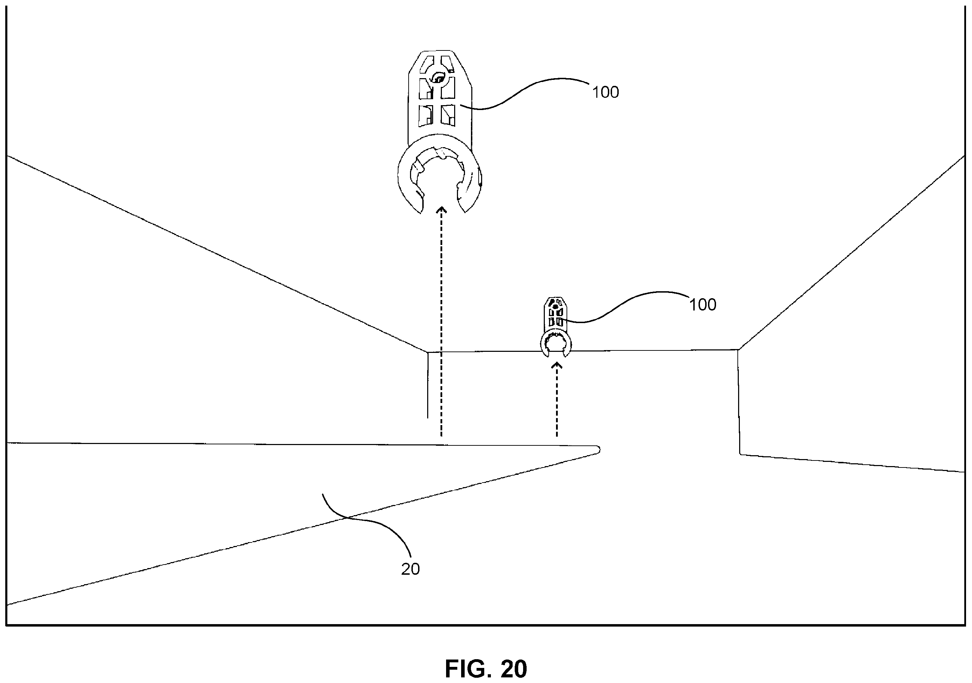

FIG. 20 is a perspective view showing a second step of the method of installing the hydronic system to a subfloor sheathing or other horizontal structure under a floor. In this second step, the tubing 20 is attached to the tube-gripping portions of the surface-mountable tube-supporting brackets 100. This may be accomplished by pressing the tubing 20 upwardly against the tube-gripping portions to cause the mouths of the tube-gripping portions to flare open and to receive the tubing. The tube-gripping portions then grip the tubing as the mouths of the tube-gripping portions attempt to return elastically to their undeformed positions.

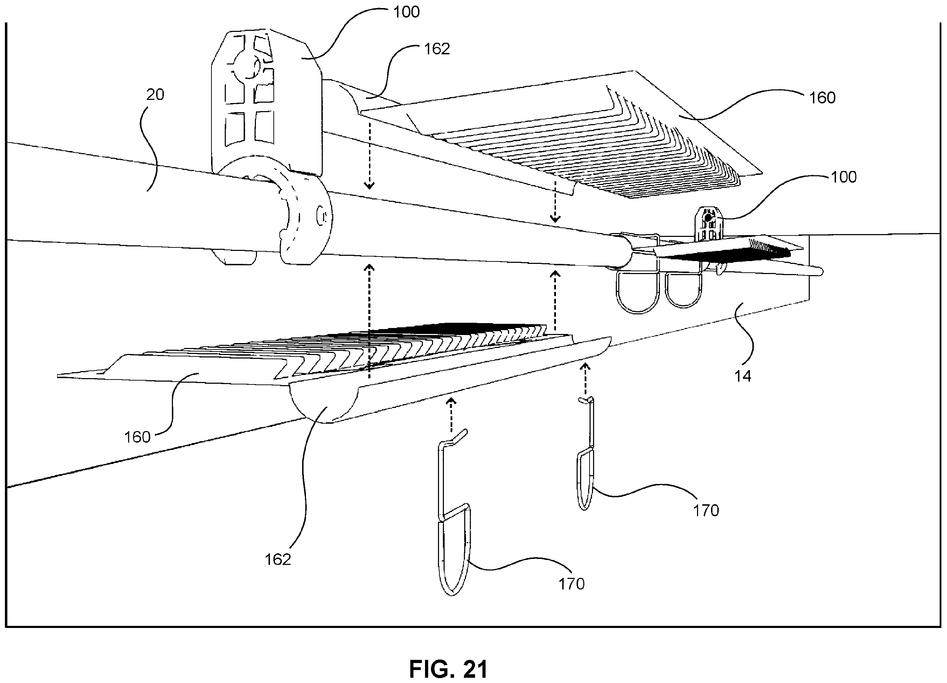

FIG. 21 is a perspective view showing a third step of the method of installing the hydronic system to a subfloor sheathing or other horizontal structure under a floor. In this third step, the heat-exchanging fins 160 are attached to the tubing 20 by twist clips 170. The semicircular troughs 162 of the fins 160 are placed on the tubing 20 (one from the top and the other from the bottom, as illustrated by way of example in FIG. 21).

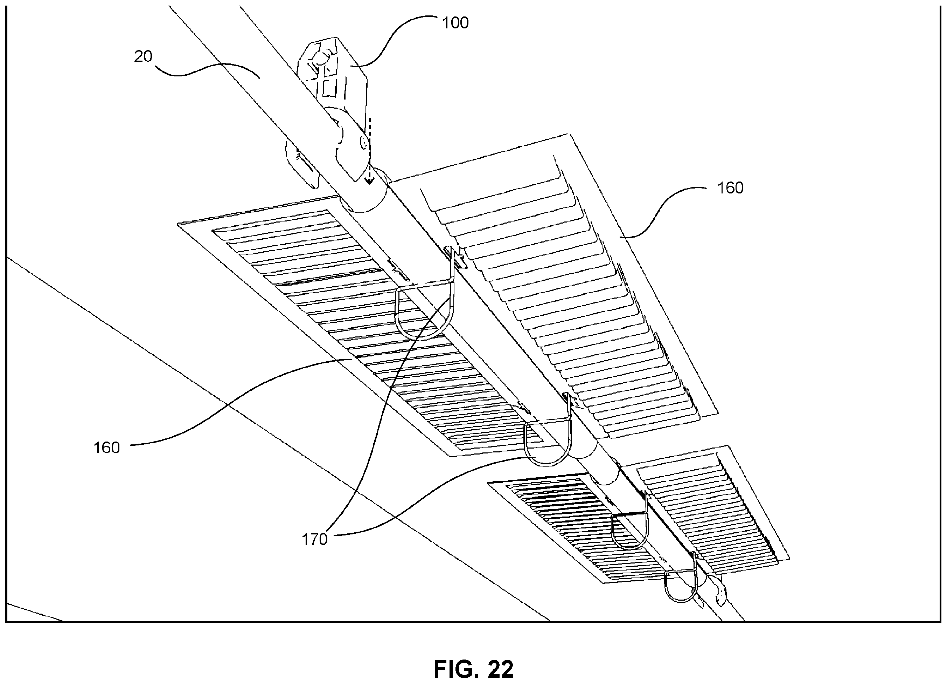

FIG. 22 is a perspective view showing a fourth (and final) step of the method of installing the hydronic system to a subfloor sheathing or other horizontal structure under a floor. In this fourth and final step, the twist clips 170 are all inserted and rotated to affix the fins 160 to the tubing 20. The hydronic system is now ready to operate. The hydronic system may be a radiant floor heating system.

Yet another aspect of the disclosure is a method of installing a tube, pipe or conduit, the method comprising a step of fastening a surface-mountable tube-supporting bracket to a horizontal surface of a subfloor sheathing, the surface-mountable tube-supporting bracket having a body having a hole though which a fastener is inserted to fasten surface-mountable tube-supporting bracket. The surface-mountable tube-supporting bracket has a tube-gripping portion to receive and grip a tubular brace. The method may include a subsequent step of attaching the tube, pipe or conduit to the tube-gripping portion of the surface-mountable tube-supporting bracket. The step of attaching the tube, pipe or conduit to the tube-gripping portion can be accomplished by pressing the tube, pipe or conduit against a mouth of the tube-gripping portion to thereby cause the mouth to flex open. In this method, the surface-mountable tube-supporting bracket has a flat bottom to abut the horizontal surface of the subfloor sheathing.

In one embodiment, the brackets 100, 200, 300, 400 are made of crosslinked polyethylene (PEX), i.e. the same material as the tubing 20. Similarly, the tubular brace 30 can be made of PEX. The brackets may be made from recycled or repurposed PEX tubing that has been cut for various plumbing jobs. Thus, this particular embodiment is very environmentally friendly as it recycles scrap materials that would otherwise be thrown away as garbage or waste material.

The various embodiments described herein may be used in a hydronic system such as a radiant floor heating system or a radiant wall heating system. Alternatively, the hydronic system may be a cooling system or a system capable of alternately heating and cooling. The hydronic system may use water as the fluid medium; however another heat-transfer fluid may be used in other variants.

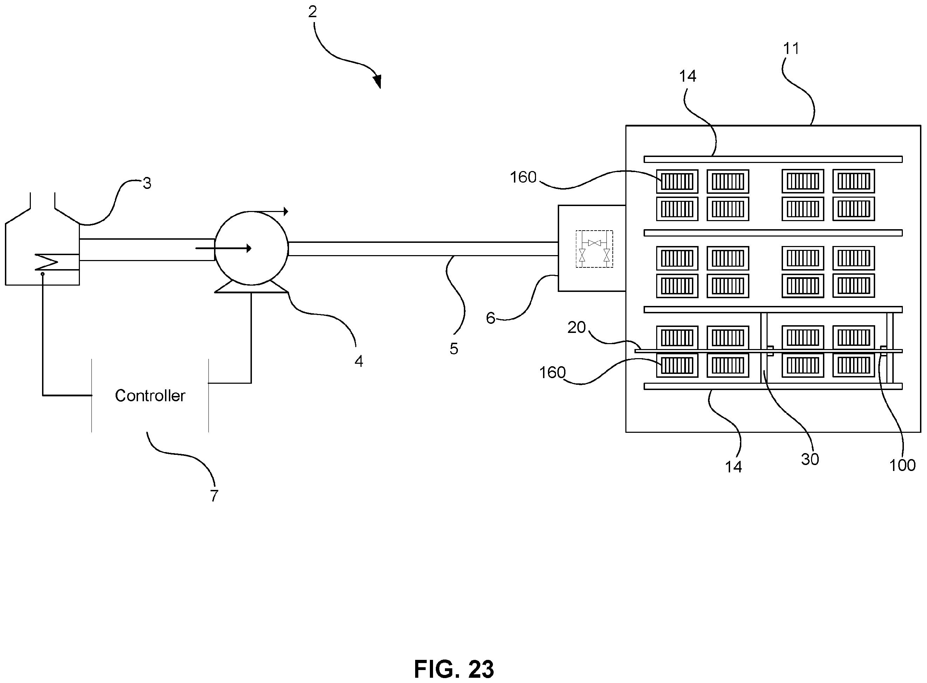

As depicted by way of example in FIG. 23, the hydronic system 2 is installed below a floor 11 and between joists 14. As shown in FIG. 23, the hydronic system 2 includes a tube 20 (hydronic tubing) to carry water or other heat-exchanging fluid for heat transfer. The hydronic system 2 includes a heater 3 to heat the water. The hydronic system includes a pump 4 to pump the water from the heater 3 through a main supply line 5 to a manifold or valve subsystem 6 that distributes water to the various zones of the dwelling depending on heat demand, e.g. in response to a thermostat setting in the dwelling. The hydronic system 2 may include a controller 7 to control the heater and/or pump to supply water at a desired temperature and/or flow rate. The hydronic system includes one or more of the various brackets 100, 200, 300, 400 described above for supporting the tubing 20 and fins160 above a tubular brace 30 for heat exchange between the joists 14 below the floor 11.

For the purposes of interpreting this specification, when referring to elements of various embodiments of the present invention, the articles "a", "an", "the" and "said" are intended to mean that there are one or more of the elements. The terms "comprising", "including", "having", "entailing" and "involving", and verb tense variants thereof, are intended to be inclusive and open-ended by which it is meant that there may be additional elements other than the listed elements.

This invention has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A bracket system comprising:
a pair of surface-mountable tube-supporting brackets mounted to a first joist (14) and a second joist (14) below a floor, or to a first stud (12) and a second stud (12) of a wall, wherein each of the pair of surface-mountable tube-supporting brackets has a body configured to receive a fastener to fasten the body to one of the first and second joists (14) or to one of the first and second studs (12), and wherein each of the pair of surface-mountable tube-supporting brackets has a tube-gripping portion; and
a tubular brace (30) attached to the tube-gripping portion of each of the pair of surface-mountable tube-supporting brackets such that the tubular brace (30) is secured between either the first joist (14) and the second joist (14) or between the first stud (12) and the second stud (12).

2. The bracket system of claim 1 wherein the body is flat to abut a surface of one of the first and second studs (12) or a surface of one of the first and second joists (14) and wherein the body comprises a first hole in a first direction and a second hole in a second direction that is orthogonal to the first direction.

3. The bracket system of claim 1 or claim 2 wherein the tube-gripping portion is C-shaped and comprises a mouth region that flexes open to receive and grip the tubular brace.

4. The bracket system of any one of claims 1 to 3, wherein the tube-gripping portion comprises teeth, grooves or ridges to grip the tubular brace (30).

5. The bracket system of any one of claims 1 to 4 wherein the tube-gripping portion of each of the surface-mountable tube-supporting brackets defines an average internal diameter D1 and an outer diameter D2 that ranges from 1.4 to 1.8 times D1 while being made of a material having a modulus of elasticity ranging from 600 to 1150 MPa.

6. The bracket system of any one of claims 1 to 4 wherein the tube-gripping portion of each of the surface-mountable tube-supporting brackets defines an average internal diameter D1 and an outer diameter D2 that ranges from 1.5 to 1.7 times D1 while being made of a material having a modulus of elasticity ranging from 600 to 1150 MPa.

7. The bracket system of any one of claims 1 to 6 wherein the surface-mountable tube-supporting brackets are made of crosslinked polyethylene (PEX).

8. The bracket system of any one of claims 1 to 7 wherein the tubular brace (30) is made of crosslinked polyethylene (PEX) tubing.

9. The bracket system of any one of claims 1 to 8 further comprising a tube-to-tube bracket comprising a first tube-gripping portion for attaching to the tubular brace and further comprising a second tube-gripping portion to receive and grip a tube, pipe or conduit.

10. The bracket system of any one of claims 1 to 8 further comprising a tube-to-tube bracket comprising a first tube-gripping portion for attaching to the tubular brace and further comprising a second tube-gripping portion oriented orthogonally to the first tube-gripping portion to receive and grip a tube, pipe or conduit.

11. The bracket system of any one of claims 1 to 10 further comprising an inverted J-shaped box-supporting bracket a tube-gripping portion to attach to the tubular brace and a straight portion having a hole for receiving a fastener to fasten a box to the box-supporting bracket.

12. The bracket system of any one of claims 1 to 11 further comprising a curved tube-supporting bracket having a first annular collar and a second annular collar aligned with and spaced apart from the first annular collar, thereby defining a gap between the first and second annular collars to receive a tube-to-tube bracket in the gap between the first and second annular collars, a curved guide portion for supporting an underside of the tube, while bending the tube over a predetermined angle, and a lower restraint to restrain the tube, wherein the tube-to-tube bracket has a tube-gripping portion to grip the tubular brace.

13. A method of installing a tube, pipe or conduit, the method comprising:
mounting a pair of surface-mountable tube-supporting brackets to surfaces of the first and second joists (14), or to surfaces of the first and second studs (12), wherein each of the pair of surface-mountable tube-supporting brackets each has a tube-gripping portion to receive and grip a tubular brace (30).
attaching the tubular brace (30) to the tube-gripping portion of each of the surface-mountable tube-supporting brackets such that the tubular brace (30) extends between the first and second joists (14) or between the first and second studs (12);
attaching a first tube-gripping portion of a tube-to-tube bracket to the tubular brace; and
attaching the tube, pipe or conduit to a second tube-gripping portion of the tube-to-tube bracket.

14. The method of claim 13 comprising attaching a tube-gripping portion of an inverted J-shaped box-supporting bracket to the tubular brace and fastening a box to the box-supporting bracket through a hole in a straight portion extending from the tube-gripping portion, wherein the box is connected to the conduit.

15. The method of claim 13 or claim 14 further comprising providing a curved tube-supporting bracket having a first annular collar and a second annular collar aligned with and spaced apart from the first annular collar, thereby defining a gap between the first and second annular collars, inserting a tube-to-tube bracket in the gap between the first and second annular collars, attaching a tube-gripping portion of the tube-to-tube bracket to the tubular brace, placing the tube over a curved guide portion for supporting an underside of the tube, while bending the tube over a predetermined angle.
